# EUROPEAN PATENT APPLICATION

(11) **EP 4 787 323 A1**
(43) Date of publication of application: **05.08.2026**
(21) Application number: 24870986.7
(22) Date of filing: 27.09.2024
(51) Int. Cl.: G06T 17/00, G06T 15/00

(54) **METHOD AND APPARATUS FOR ACQUIRING THREE-DIMENSIONAL MODEL, AND DEVICE AND STORAGE MEDIUM**

(30) Priority: 28.09.2023 CN 202311280633
(71) Applicant: Shining 3D Tech Co., Ltd., Hangzhou, Zhejiang 311258 (CN)
(72) Inventor: SHEN, Song, Hangzhou, Zhejiang 311258 (CN); ZHANG, Huiquan, Hangzhou, Zhejiang 311258 (CN); SUN, Bo, Hangzhou, Zhejiang 311258 (CN); ZHAO, Bintao, Hangzhou, Zhejiang 311258 (CN)
(74) Representative: Metida
(86) International application number: PCT/CN2024/121818
(87) International publication number: WO 2025/067449

(57) **Abstract**

A method for acquiring a three-dimensional model includes: acquiring an initial three-dimensional model of a target object and a plurality of original single-frame textures, wherein the initial three-dimensional model is generated based on a plurality of target single-frame point clouds, and the target single-frame point clouds are determined by removing point cloud data to be deleted from original single-frame point clouds; removing texture data corresponding to the point cloud data to be deleted from the plurality of original single-frame textures to obtain a plurality of target single-frame textures; and rendering the plurality of target single-frame textures onto the initial three-dimensional model to obtain a target three-dimensional model of the target object.

## Description

The present application claims priority to Chinese Patent Application No. 202311280633.8, filed with the China National Intellectual Property Administration on September 28, 2023, and entitled "METHOD FOR ACQUIRING THREE-DIMENSIONAL MODEL, APPARATUS, DEVICE, AND STORAGE MEDIUM", the entire content of which is incorporated herein by reference.

### TECHNICAL FIELD

The present disclosure relates to the field of three-dimensional model generation technology, and in particular, to a method for acquiring a three-dimensional model, an apparatus, a device, and a storage medium.

### BACKGROUND

When facing needs such as oral restoration, texture data of a target object such as a tooth, a prepared teeth, and a gum is generally rendered onto a three-dimensional model determined based on point cloud data. This facilitates acquiring a rendered model of the target object and allows a user to analyze the rendered model conveniently to address issues like oral restoration.

In many cases, the point cloud data of the target object often includes data to be deleted, such as lip side data and impurity data. At this time, it is necessary to remove this data to be deleted from the point cloud data and determine the three-dimensional model based on the point cloud data from which the data to be deleted has been removed. However, the texture data still retains the texture corresponding to the deleted data. If the texture retaining the data to be deleted is directly rendered onto the three-dimensional model from which the data to be deleted has been removed, a problem arises where a rendering result of the three-dimensional model does not match the user's expectation, thereby affecting the user's accurate analysis of the rendering result.

### SUMMARY

To solve the above technical problem, the present disclosure provides a method for acquiring a three-dimensional model, an apparatus, a device, and a storage medium.

In a first aspect, the present disclosure provides a method for acquiring a three-dimensional model. The method includes:

Acquiring an initial three-dimensional model of a target object and a plurality of original single-frame textures, wherein the initial three-dimensional model is generated based on a plurality of target single-frame point clouds, and the target single-frame point clouds are determined by removing point cloud data to be deleted from original single-frame point clouds;

Obtaining a plurality of target single-frame textures by removing texture data corresponding to the point cloud data to be deleted from the plurality of original single-frame textures; and

Obtaining a target three-dimensional model of the target object by rendering the plurality of target single-frame textures onto the initial three-dimensional model.

In a second aspect, the present disclosure provides an apparatus for acquiring a three-dimensional model. The apparatus includes:

An acquisition module configured to acquire a plurality of original single-frame point clouds of the target object and determine a region to be deleted of the target object;

A determination module configured to remove, based on the region to be deleted, the point cloud data to be deleted from the original single-frame point clouds to obtain the target single-frame point clouds;

A rendering module configured to perform mesh fusion on the target single-frame point clouds to obtain the initial three-dimensional model.

In a third aspect, an embodiment of the present disclosure further provides an electronic device. The device includes:

A processor, a storage device, and executable instructions stored on the storage device;

Wherein the processor reads the executable instructions from the storage device and implements the method provided in the first aspect when executing the executable instructions.

In a fourth aspect, an embodiment of the present disclosure further provides a computer-readable storage medium having a computer program stored thereon, which, when executed by a processor, implements the method provided in the first aspect.

The technical solutions provided by the embodiments of the present disclosure have the following advantages compared to the prior art:

In the method, apparatus, device, and storage medium for acquiring a three-dimensional model according to the embodiments of the present disclosure, an initial three-dimensional model of a target object and a plurality of original single-frame textures are acquired, where the initial three-dimensional model is generated based on a plurality of target single-frame point clouds, and the target single-frame point clouds are determined by removing point cloud data to be deleted from original single-frame point clouds; texture data corresponding to the point cloud data to be deleted is removed from the plurality of original single-frame textures to obtain a plurality of target single-frame textures; the plurality of target single-frame textures is rendered onto the initial three-dimensional model to obtain a target three-dimensional model of the target object. Thus, based on the data to be deleted removed from the original single-frame point clouds, corresponding textures can be removed from the texture data, and the texture data after removing the corresponding textures is rendered onto the initial three-dimensional model, thereby rendering a result that conforms to the user's expectation, facilitating the user's accurate analysis of the rendering result to obtain precise tooth restoration suggestions and other information.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to more clearly illustrate the technical solutions in the embodiments of the present disclosure or in the prior art, the following briefly introduces the drawings required for describing the embodiments or the prior art. Apparently, for those of ordinary skill in the art, other drawings can be obtained based on these drawings without exercising inventive effort.
FIG. 1 is a schematic diagram of a tooth to be scanned including lip side data provided by the prior art;
FIG. 2 is a schematic diagram of a rendered target three-dimensional model including lip side data provided by the prior art;
FIG. 3 is a schematic diagram of a rendering result with an occlusion effect provided by the prior art;
FIG. 4 is a schematic flowchart of a method for acquiring a three-dimensional model provided by an embodiment of the present disclosure;
FIG. 5 is a schematic diagram of an initial three-dimensional model provided by an embodiment of the present disclosure;
FIG. 6 is a schematic diagram of a target three-dimensional model provided by an embodiment of the present disclosure;
FIG. 7 is a schematic flowchart of another method for acquiring a three-dimensional model provided by an embodiment of the present disclosure;
FIG. 8 is a schematic structural diagram of an apparatus for acquiring a three-dimensional model provided by an embodiment of the present disclosure;
FIG. 9 is a schematic structural diagram of an electronic device provided by an embodiment of the present disclosure.

### DETAILED DESCRIPTION

In order to understand the above objectives, features, and advantages of the present disclosure more clearly, the solutions of the present disclosure will be further described below. It should be noted that, in the case of no conflict, the embodiments of the present disclosure and the features in the embodiments can be combined with each other.

In the following description, many specific details are set forth to facilitate a thorough understanding of the present disclosure. However, the present disclosure can also be implemented in other ways different from those described herein. Obviously, the embodiments in the description are only a part of the embodiments of the present disclosure, rather than all the embodiments.

During the scanning of a target object, a black-and-white camera on a three-dimensional scanner is used to collect point cloud data of the target object, while a texture camera is used to collect texture data of the target object. The point cloud data is then subjected to mesh fusion to generate an initial three-dimensional model, and the texture data is rendered onto the initial three-dimensional model to obtain a target three-dimensional model of the target object that has been rendered.

In one case, the point cloud data and the texture data may include data to be deleted (e.g., the lip side data on the target object 's gum). After mesh fusion of the point cloud data to obtain the initial three-dimensional model, the data to be deleted can be removed from the initial three-dimensional model. However, the data to be deleted is still retained in the texture data. The texture data retaining the data to be deleted is then rendered onto the initial three-dimensional model from which the data to be deleted has been removed, resulting in a rendered target three-dimensional model.

In another case, at the beginning of scanning the target object, the point cloud data and the texture data do not include the data to be deleted. During the scanning process, the texture of the target object may change (for example, a user draws a tooth margin line on the target object). At this time, the point cloud data and the texture data include the data to be deleted. After mesh fusion of the point cloud data to obtain the initial three-dimensional model, the data to be deleted can be removed from the initial three-dimensional model. Then, all the collected texture data is rendered onto the initial three-dimensional model, resulting in a rendered three-dimensional model.

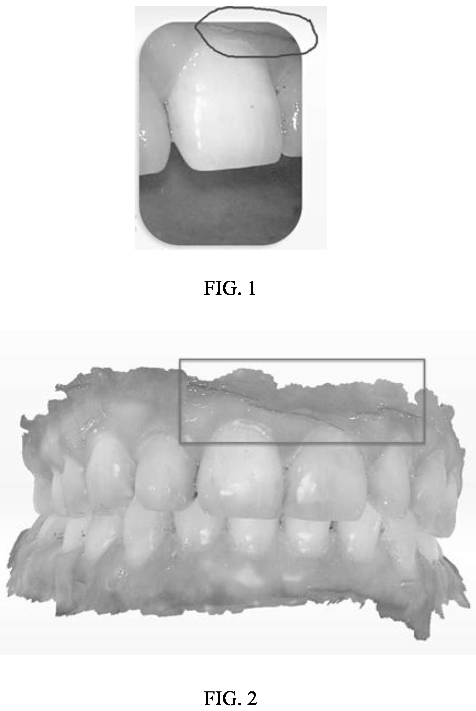

For ease of understanding, FIG. 1 shows a schematic diagram of a tooth to be scanned including lip side data, and FIG. 2 shows a schematic diagram of a rendered target three-dimensional model including the lip side data. An area inside a curve frame in FIG. 1 is the user's upper lip. After scanning the tooth to be scanned in FIG. 1, the point cloud data and the texture data include data to be deleted (i.e., lip side data). After mesh fusion of the point cloud data to obtain the initial three-dimensional model, the data to be deleted can be removed from the initial three-dimensional model. However, the lip side data is still retained in the texture data. The texture data retaining the lip side data is then rendered onto the initial three-dimensional model from which the data to be deleted has been removed, resulting in the rendered target three-dimensional model shown in FIG. 2, where a rectangular box in FIG. 2 includes the lip side data.

It can be seen that the existing solution renders the texture retaining the data to be deleted onto the initial three-dimensional model from which the data to be deleted has been removed, causing a rendering result of the target three-dimensional model to not match the user's expectation, thereby affecting the user's accurate analysis of the rendering result.

In related technologies, a three-dimensional scanner can also collect the point cloud data and the texture data of the target object from different viewing angles. However, the initial three-dimensional model generated after mesh fusion of the point cloud data may have occlusion issues (e.g., a local mesh area occludes another local mesh area at a specific imaging viewing angle). Meanwhile, the texture data includes all textures of the local mesh area at the specific viewing angle and partial textures of the occluded local mesh area. At this time, after rendering the texture data onto the initial three-dimensional model, the texture data at the specific viewing angle is simultaneously rendered onto the occluding local mesh area. This rendering result is obviously unrealistic and therefore also inconsistent with the user's desired rendering result.

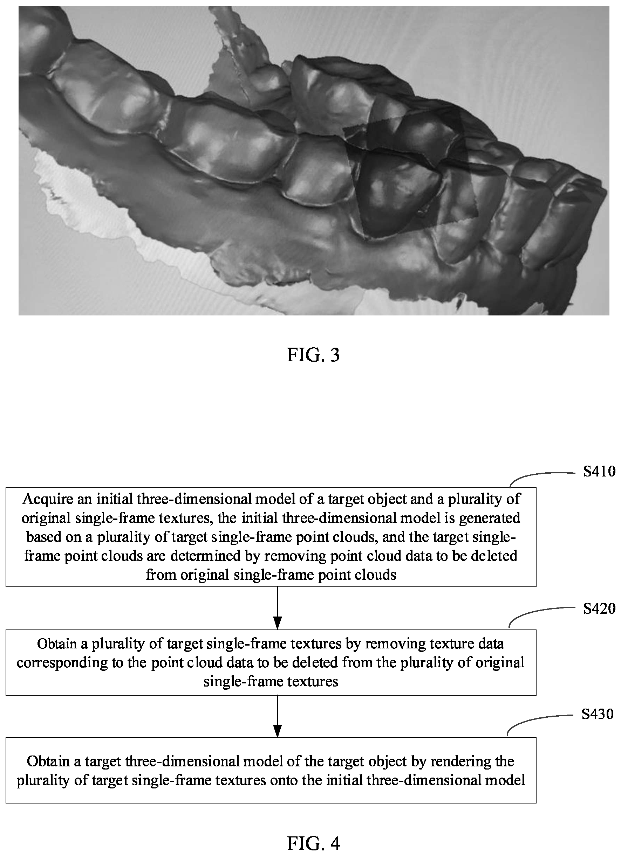

For ease of understanding, FIG. 3 shows a schematic diagram of a rendering result with an occlusion effect. The square box in FIG. 3 represents texture data, which is simultaneously rendered onto both the occluding tooth and the occluded tooth. It can be seen that different teeth correspond to the same rendering result. This situation may cause the user to make erroneous analyses. Therefore, this rendering result is also inconsistent with the user's desired rendering result.

In order to obtain a rendering result that meets the user's expectation, embodiments of the present disclosure provide a method for acquiring a three-dimensional model, an apparatus, a device, and a storage medium.

The method for acquiring the three-dimensional model provided by the embodiments of the present disclosure will be described below with reference to FIG. 4 to FIG. 7. In the embodiments of the present disclosure, the method for acquiring the three-dimensional model can be executed by an electronic device. The electronic device may include a device with communication functions, such as a tablet computer, a desktop computer, and a notebook computer, or a device simulated by a virtual machine or an emulator.

FIG. 4 shows a schematic flowchart of a method for acquiring the three-dimensional model provided by an embodiment of the present disclosure.

As shown in FIG. 4, the method for acquiring the three-dimensional model may include the following steps.

S410: An initial three-dimensional model of a target object and a plurality of original single-frame textures are acquired, where the initial three-dimensional model is generated based on a plurality of target single-frame point clouds, and the target single-frame point clouds are determined by removing point cloud data to be deleted from original single-frame point clouds.

In this embodiment, before a user provides an oral restoration suggestion, the user holds a three-dimensional scanner to scan multiple target objects in an oral cavity. During the scanning process, a black-and-white camera on the three-dimensional scanner is used to collect a plurality of original single-frame point clouds of the multiple target objects, and a texture camera on the three-dimensional scanner is used to collect a plurality of original single-frame textures of the multiple target objects, thereby obtaining point cloud data and texture data of each target object.

Further, the three-dimensional scanner sends the plurality of original single-frame textures and the plurality of original single-frame point clouds that are collected to the electronic device. When the target object's gum is covered by the lips, the plurality of original single-frame textures and the plurality of original single-frame point clouds include data to be deleted (e.g., lip side data). Then, the electronic device can remove the point cloud to be deleted from the plurality of original single-frame point clouds to obtain a plurality of target single-frame point clouds, and generate the initial three-dimensional model based on the plurality of target single-frame point clouds.

The target object may be a tooth, a prepared tooth, or a gum in the oral cavity.

The original single-frame point cloud is point cloud data obtained by reconstructing a depth map collected by the three-dimensional scanner.

Optionally, the point cloud data to be deleted includes, but is not limited to, point clouds corresponding to data to be deleted such as data at an edge of a scanning head area, lip side data, impurity data.

In this embodiment, methods for acquiring the initial three-dimensional model of the target object include, but are not limited to, the following:

A plurality of original single-frame point clouds of the target object are acquired, and a region to be deleted of the target object is determined; based on the region to be deleted, the point cloud data to be deleted is removed from the original single-frame point clouds to obtain the target single-frame point clouds; mesh fusion is performed on the target single-frame point clouds to obtain the initial three-dimensional model.

In one case, a method for determining the region to be deleted of the target object includes: performing region identification processing on the plurality of original single-frame point clouds using a pre-trained identification model to obtain the region to be deleted of the target object.

In another case, a method for determining the region to be deleted of the target object includes: in response to a region selection operation on the initial three-dimensional model, determining the region to be deleted on the three-dimensional model.

The region to be deleted may be located in a pixel coordinate system, and the original single-frame point clouds are located in a world coordinate system. Then, based on a conversion relationship between the pixel coordinate system and the world coordinate system, the region to be deleted is mapped into the plurality of original single-frame point clouds to determine a point cloud deletion region in the original single-frame point clouds. The point cloud data to be deleted in the point cloud deletion region is removed from the plurality of original single-frame point clouds to obtain the plurality of target single-frame point clouds.

The initial three-dimensional model can be understood as a mesh model, which is specifically generated by mesh fusion of the plurality of target single-frame point clouds. The initial three-dimensional model includes vertices and triangular patches.

To facilitate the user's real-time viewing of the scanning results, after acquiring the plurality of original single-frame point clouds of the target object, the method may further include the following steps: performing sampling processing on the original single-frame point clouds according to a first sampling method to obtain first sampled data in the original single-frame point clouds; performing mesh fusion on the first sampled data to obtain a real-time reconstruction model, and displaying the real-time reconstruction model.

The first sampling method includes, but is not limited to, random sampling, fixed-point sampling, fixed-interval sampling, and the like.

It can be understood that during the scanning process, performing mesh fusion based on part of the original single-frame point clouds that are collected can quickly generate a real-time three-dimensional model, facilitating the user to quickly determine based on the real-time three-dimensional model whether there are unscanned teeth and decide whether to continue scanning, thereby improving the user's scanning experience.

To facilitate the user's analysis of the initial three-dimensional model, methods for performing mesh fusion on the target single-frame point clouds to obtain the initial three-dimensional model include, but are not limited to, the following: sampling the target single-frame point clouds according to a second sampling method to obtain second sampled data in the target single-frame point clouds; performing mesh fusion on the second sampled data to obtain the initial three-dimensional model.

The second sampling method includes, but is not limited to, random sampling, fixed-point sampling, fixed-interval sampling, and the like.

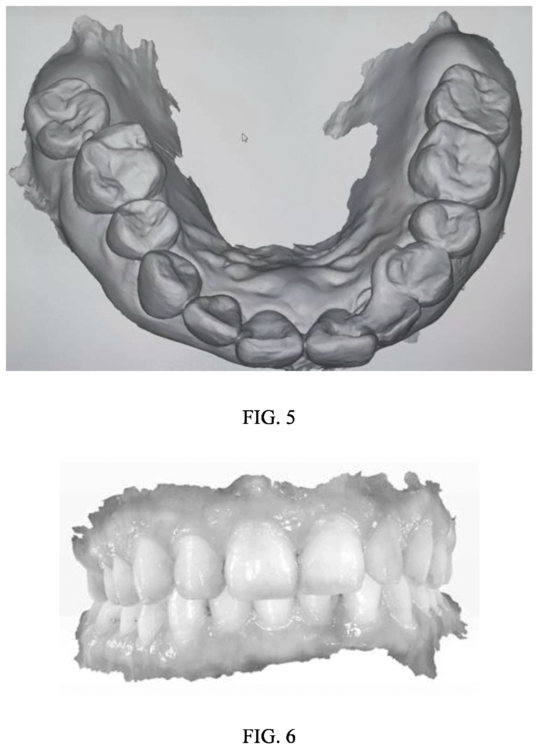

FIG. 5 shows a schematic diagram of an initial three-dimensional model. In one case, since the initial three-dimensional model is generated after sampling the target single-frame point clouds, a speed of generating the initial three-dimensional model is fast, facilitating the user to quickly and accurately analyze the initial three-dimensional model shown in FIG. 5 to meet the user's scanning needs.

S420: Texture data corresponding to the point cloud data to be deleted is removed from the plurality of original single-frame textures to obtain a plurality of target single-frame textures.

In order to obtain a rendering result that meets the user's expectation, after removing the point cloud data to be deleted from the plurality of original single-frame point clouds to obtain the plurality of target single-frame point clouds, it is also necessary to remove corresponding texture data from the plurality of original single-frame textures, so that data to be deleted, such as data at the edge of the scanning head area, lip side data, and impurity data, is also deleted from the texture data, resulting in a plurality of target single-frame textures.

In this embodiment, specific implementation ways of S420 include, but are not limited to, the following: the point cloud data to be deleted is mapped from the plurality of original single-frame point clouds to the plurality of original single-frame textures to determine texture data to be deleted in the plurality of original single-frame textures; the texture data to be deleted is removed from the plurality of original single-frame textures to obtain the plurality of target single-frame textures.

Specifically, the electronic device can determine a first mapping relationship between the original single-frame point clouds and the original single-frame textures according to a scanning sequence of the target object. Then, based on the first mapping relationship, the point cloud data to be deleted is mapped from the plurality of original single-frame point clouds to the plurality of original single-frame textures to determine the texture data to be deleted. Thus, the texture data to be deleted is determined in the plurality of original single-frame textures and is removed from the plurality of original single-frame textures, thereby retaining the texture data other than the data to be deleted such as lip side data and impurity data.

S430: The plurality of target single-frame textures are rendered onto the initial three-dimensional model to obtain a target three-dimensional model of the target object.

The target three-dimensional model can also be understood as a mesh model, which is specifically generated by fusing the plurality of target single-frame point clouds after rendering the plurality of target single-frame textures. The target three-dimensional model includes vertices and triangular patches.

FIG. 6 shows a schematic diagram of a target three-dimensional model provided by an embodiment of the present disclosure. It can be understood that since the plurality of target single-frame textures are texture data from which data to be deleted such as lip side data and impurity data has been removed, and the plurality of target single-frame point clouds of the initial three-dimensional model are point cloud data from which data to be deleted such as lip side data and impurity data has been removed, rendering the plurality of target single-frame textures onto the initial three-dimensional model can produce the rendering result shown in FIG. 6 that conforms to the user's expectation, facilitating the user's accurate analysis of the rendering result.

In the method for acquiring the three-dimensional model according to the embodiment of the present disclosure, the initial three-dimensional model of the target object and the plurality of original single-frame textures are acquired, where the initial three-dimensional model is generated based on the plurality of target single-frame point clouds, and the target single-frame point clouds are determined by removing point cloud data to be deleted from the original single-frame point clouds; the texture data corresponding to the point cloud data to be deleted is removed from the plurality of original single-frame textures to obtain the plurality of target single-frame textures; the plurality of target single-frame textures are rendered onto the tooth three-dimensional model to obtain the target three-dimensional model of the target object. Thus, based on the data to be deleted removed from the original single-frame point clouds, corresponding textures can be removed from the texture data, and the texture data after removing the corresponding textures is rendered onto the initial three-dimensional model, thereby rendering a result that conforms to the user's expectation, facilitating the user's accurate analysis of the rendering result to obtain precise tooth restoration suggestions and other information.

In another embodiment of the present disclosure, to solve the problem of occluding teeth and occluded teeth being rendered with the same texture data, the texture data can be rendered onto the initial three-dimensional model based on depth information, so that different local mesh areas are rendered with their respective corresponding texture data.

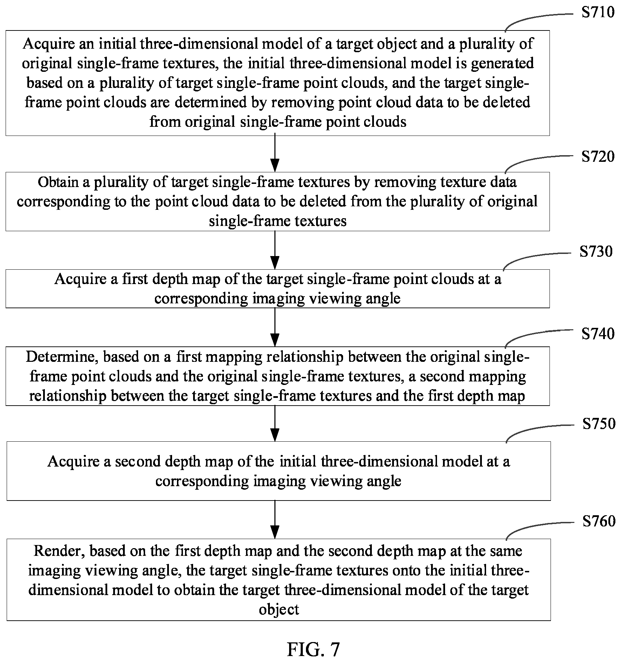

FIG. 7 shows a schematic flowchart of another method for acquiring a three-dimensional model provided by an embodiment of the present disclosure.

As shown in FIG. 7, the method for acquiring the three-dimensional model may include the following steps.

S710: An initial three-dimensional model of a target object and a plurality of original single-frame textures are acquired, where the initial three-dimensional model is generated based on a plurality of target single-frame point clouds, and the target single-frame point clouds are determined by removing point cloud data to be deleted from original single-frame point clouds.

S720: Texture data corresponding to the point cloud data to be deleted is removed from the plurality of original single-frame textures to obtain a plurality of target single-frame textures.

Here, S710 to S720 are similar to S410 to S420, and are not repeated here.

S730: A first depth map of the target single-frame point clouds at a corresponding imaging viewing angle is acquired.

In this embodiment, during a scanning phase of the target object, the target object can be scanned at a plurality of different imaging viewing angles to acquire first depth maps at the plurality of different imaging viewing angles. The original single-frame point clouds are then generated by reconstructing the first depth maps at the plurality of different imaging viewing angles. Subsequently, the point cloud data to be deleted is removed from the original single-frame point clouds to determine the target single-frame point clouds. Thus, the target single-frame point clouds can correspond to the first depth maps at the plurality of different imaging viewing angles.

The first depth map at each imaging viewing angle may include depth information corresponding to the target single-frame point clouds.

S740: A second mapping relationship between the target single-frame textures and the first depth map is determined based on a first mapping relationship between the original single-frame point clouds and the original single-frame textures.

It can be understood that the target single-frame textures are determined from the original single-frame textures, and the target single-frame point clouds are determined from the original single-frame point clouds. Moreover, there is the first mapping relationship between the original single-frame point clouds and the original single-frame textures. Therefore, there is also the first mapping relationship between the target single-frame point clouds and the target single-frame textures. Next, since the target single-frame point clouds correspond to the first depth maps at the plurality of different imaging viewing angles, the second mapping relationship can be determined based on the first mapping relationship and the correspondence between the target single-frame point clouds and the first depth maps at the plurality of different imaging viewing angles.

S750: A second depth map of the initial three-dimensional model at a corresponding imaging viewing angle is acquired.

In this embodiment, after obtaining the initial three-dimensional model, back-projection processing can be performed on the initial three-dimensional model at a plurality of viewing angles to obtain second depth maps at a plurality of different imaging viewing angles.

It can be understood that the initial three-dimensional model includes a plurality of local mesh areas, each local mesh area is associated with one target single-frame point cloud, and each target single-frame point cloud corresponds to one second depth map. Since the initial three-dimensional model is three-dimensional, after back-projecting the initial three-dimensional model at the plurality of different imaging viewing angles, the same imaging viewing angle corresponds to one or more second depth maps.

S760: The target single-frame textures are rendered onto the initial three-dimensional model based on the first depth map and the second depth map at the same imaging viewing angle to obtain the target three-dimensional model of the target object.

In this embodiment, specific implementation methods of S760 include, but are not limited to, the following:

Acquiring target depth information equal to that of the first depth map from at least one second depth map; and rendering the target single-frame textures onto a target mesh area corresponding to the target depth information to obtain the target three-dimensional model.

It can be understood that any imaging viewing angle corresponds to one first depth map. However, any imaging viewing angle may correspond to one or more second depth maps. Therefore, when the first depth information in a certain first depth map is not equal to the second depth information in the second depth map, it results in the local mesh area corresponding to the second depth information not being the local mesh area corresponding to the target single-frame texture. If rendering is performed directly, the texture data at that imaging viewing angle may be rendered simultaneously onto the occluding local mesh areas, i.e., a rendering error occurs.

To solve this problem, firstly, the target depth information equal to that of the first depth map is acquired from the second depth maps at the same imaging viewing angle, so that the local mesh area corresponding to the second depth information becomes the local mesh area corresponding to the target single-frame texture. This local mesh area is taken as the target mesh area. Then, the target single-frame textures are rendered onto the target mesh area corresponding to the target depth information to obtain the target three-dimensional model, thereby avoiding the problem of texture data at a certain imaging viewing angle being rendered simultaneously onto occluding local mesh areas, and obtaining the target three-dimensional model that meets the user's expectation.

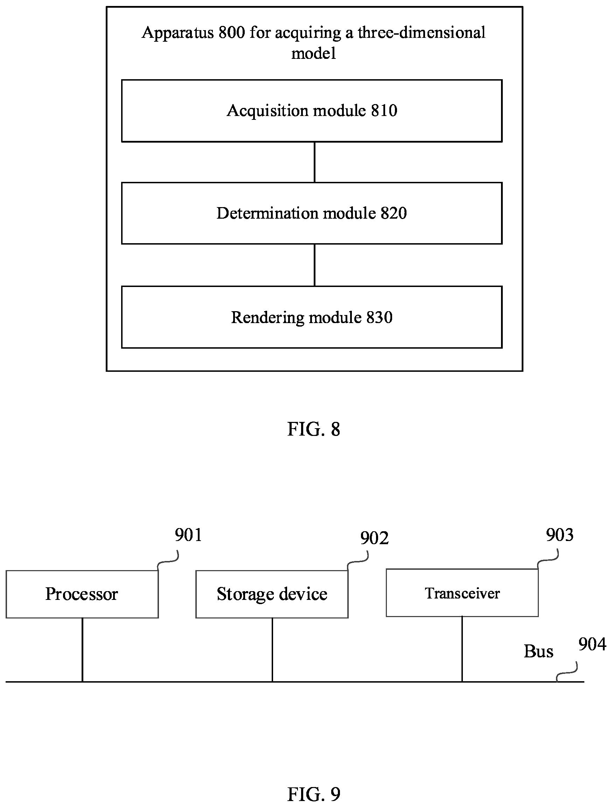

The embodiments of the present disclosure further provide an apparatus for acquiring the three-dimensional model for implementing the above method for acquiring the three-dimensional model. The apparatus will be described below with reference to FIG. 8. In the embodiments of the present disclosure, the apparatus for acquiring the three-dimensional model can be an electronic device. The electronic device may include a device with communication functions, such as a tablet computer, a desktop computer, and a notebook computer, or a device simulated by a virtual machine or an emulator.

FIG. 8 shows a schematic structural diagram of the apparatus for acquiring the three-dimensional model provided by an embodiment of the present disclosure.

As shown in FIG. 8, the apparatus 800 for acquiring the three-dimensional model may include:

An acquisition module 810 configured to acquire an initial three-dimensional model of a target object and a plurality of original single-frame textures, where the initial three-dimensional model is generated based on a plurality of target single-frame point clouds, and the target single-frame point clouds are determined by removing point cloud data to be deleted from original single-frame point clouds;

A determination module 820 configured to remove texture data corresponding to the point cloud data to be deleted from the plurality of original single-frame textures to obtain a plurality of target single-frame textures;

A rendering module 830 configured to render the plurality of target single-frame textures onto the initial three-dimensional model to obtain a target three-dimensional model of the target object.

In the apparatus for acquiring a three-dimensional model according to the embodiment of the present disclosure, an initial three-dimensional model of a target object and a plurality of original single-frame textures are acquired, wherein the initial three-dimensional model is generated based on a plurality of target single-frame point clouds, and the target single-frame point clouds are determined by removing point cloud data to be deleted from original single-frame point clouds; texture data corresponding to the point cloud data to be deleted is removed from the plurality of original single-frame textures to obtain a plurality of target single-frame textures; the plurality of target single-frame textures is rendered onto the initial three-dimensional model to obtain a target three-dimensional model of the target object. Thus, based on the data to be deleted removed from the original single-frame point clouds, corresponding textures can be removed from the texture data, and the texture data after removing the corresponding textures is rendered onto the initial three-dimensional model, thereby rendering a result that conforms to the user's expectation, facilitating the user's accurate analysis of the rendering result to obtain precise tooth restoration suggestions and other information.

In some embodiments of the present disclosure, the determination module 820 includes:

A mapping unit configured to map the point cloud data to be deleted from the plurality of original single-frame point clouds onto the plurality of original single-frame textures to determine texture data to be deleted in the plurality of original single-frame textures;

A first removal unit configured to remove the texture data to be deleted from the plurality of original single-frame textures to obtain the plurality of target single-frame textures.

In some embodiments of the present disclosure, the mapping unit is specifically configured to:

Determine a first mapping relationship between the original single-frame point clouds and the original single-frame textures according to a scanning sequence of the target object;

Determine the texture data to be deleted by mapping the point cloud data to be deleted from the plurality of original single-frame point clouds onto the plurality of original single-frame textures based on the first mapping relationship.

In some embodiments of the present disclosure, the rendering module 830 includes:

A first acquisition unit configured to acquire a first depth map of the target single-frame point clouds at a corresponding imaging viewing angle;

A first determination unit configured to determine, based on a first mapping relationship between the original single-frame point clouds and the original single-frame textures, a second mapping relationship between the target single-frame textures and the first depth map;

A second acquisition unit configured to acquire a second depth map of the initial three-dimensional model at a corresponding imaging viewing angle;

A rendering unit configured to render, based on the first depth map and the second depth map at the same imaging viewing angle, the target single-frame textures onto the initial three-dimensional model to obtain the target three-dimensional model of the target object.

In some embodiments of the present disclosure, the rendering unit is specifically configured to:

Acquire target depth information equal to that of the first depth map from the second depth map;

Render the target single-frame textures onto a target mesh area corresponding to the target depth information to obtain the target three-dimensional model.

In some embodiments of the present disclosure, the acquisition module 810 includes:

An acquisition unit configured to acquire a plurality of original single-frame point clouds of the target object and determine a region to be deleted of the target object;

A second determination unit configured to remove, based on the region to be deleted, the point cloud data to be deleted from the original single-frame point clouds to obtain the target single-frame point clouds;

A mesh fusion unit configured to perform mesh fusion on the target single-frame point clouds to obtain the initial three-dimensional model.

In some embodiments of the present disclosure, the acquisition module 810 further includes:

A first sampling unit configured to perform sampling processing on the original single-frame point clouds according to a first sampling method to obtain first sampled data in the original single-frame point clouds;

A second fusion unit configured to perform mesh fusion on the first sampled data to obtain a real-time reconstruction model, and display the real-time reconstruction model.

In some embodiments of the present disclosure, the mesh fusion unit is specifically configured to:

Perform sampling on the target single-frame point clouds according to a second sampling method to obtain second sampled data in the target single-frame point clouds;

Perform mesh fusion on the second sampled data to obtain the initial three-dimensional model.

It should be noted that the apparatus 800 for acquiring the three-dimensional model shown in FIG. 8 can execute each step in the method embodiments shown in FIG. 4 to FIG. 7 and achieve each process and effect in the method embodiments shown in FIG. 4 to FIG. 7, which are not repeated here.

FIG. 9 shows a schematic structural diagram of an electronic device provided by an embodiment of the present disclosure.

As shown in FIG. 9, the electronic device may include a processor 901 and a storage device 902 storing computer program instructions.

Specifically, the processor 901 may include a central processing unit (CPU) or an application specific integrated circuit (ASIC), or may be configured as one or more integrated circuits implementing the embodiments of the present application.

The storage device 902 may include a mass storage for storing information or instructions. By way of example and not limitation, the storage device 902 may include a hard disk drive (HDD), a floppy disk drive, flash memory, an optical disk, a magneto-optical disk, magnetic tape, or a universal serial bus (USB) drive, or a combination of two or more of these. In appropriate cases, the storage device 902 may include removable or non-removable (or fixed) media. In appropriate cases, the storage device 902 may be internal or external to an integrated gateway device. In specific embodiments, the storage device 902 is a non-volatile solid-state memory. In specific embodiments, the storage device 902 includes a read-only memory (ROM). In appropriate cases, the ROM may be a mask-programmed ROM, a programmable ROM (PROM), an erasable PROM (EPROM), an electrically erasable PROM (EEPROM), an electrically alterable ROM (EAROM), or flash memory, or a combination of two or more of these.

The processor 901 reads and executes the computer program instructions stored in the storage device 902 to perform the steps of the method for acquiring a three-dimensional model provided by the embodiments of the present disclosure.

In one example, the electronic device may further include a transceiver 903 and a bus 904. As shown in FIG. 9, the processor 901, the storage device 902, and the transceiver 903 are connected and communicate with each other via the bus 904.

The bus 904 includes hardware, software, or both. By way of example and not limitation, the bus may include an accelerated graphics port (AGP) or other graphics bus, an extended industry standard architecture (EISA) bus, a front side bus (FSB), a hypertransport (HT) interconnect, an industry standard architecture (ISA) bus, an InfiniBand interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB), or other suitable bus, or a combination of two or more of these. In appropriate cases, the bus 904 may include one or more buses. Although the embodiments of the present application describe and illustrate a particular bus, the present application contemplates any suitable bus or interconnect.

The following is an embodiment of a computer-readable storage medium provided by the embodiments of the present disclosure. The computer-readable storage medium and the methods for acquiring a three-dimensional model in the above embodiments belong to the same inventive concept. For details not fully described in the embodiment of the computer-readable storage medium, reference can be made to the above embodiments of the method for acquiring a three-dimensional model.

The present embodiment provides a storage medium containing computer-executable instructions. When executed by a computer processor, the computer-executable instructions implement a method for acquiring a three-dimensional model. The method includes:

Acquiring an initial three-dimensional model of a target object and a plurality of original single-frame textures, where the initial three-dimensional model is generated based on a plurality of target single-frame point clouds, and the target single-frame point clouds are determined by removing point cloud data to be deleted from original single-frame point clouds;

Removing texture data corresponding to the point cloud data to be deleted from the plurality of original single-frame textures to obtain a plurality of target single-frame textures;

Rendering the plurality of target single-frame textures onto the initial three-dimensional model to obtain a target three-dimensional model of the target object.

Of course, a storage medium including computer-executable instructions provided by an embodiment of the present disclosure is not limited to the method operations described above, and can also perform related operations in the method for acquiring the three-dimensional model provided by any embodiment of the present disclosure.

From the above description of the implementation manners, those skilled in the art can clearly understand that the present disclosure can be implemented by means of software plus necessary general hardware, and of course, can also be implemented by hardware, but in many cases, the former is a better implementation manner. Based on this understanding, the technical solution of the present disclosure essentially or the part contributing to the prior art can be embodied in the form of a software product. The computer software product can be stored in a computer-readable storage medium, such as a floppy disk, read-only memory (ROM), random access memory (RAM), flash memory (FLASH), hard disk, or optical disk of a computer, including several instructions for causing a computer cloud platform (which can be a personal computer, a server, or a network cloud platform, etc.) to execute the method for acquiring a three-dimensional model provided by various embodiments of the present disclosure.

Note that the above are only preferred embodiments of the present disclosure and the technical principles applied. Those skilled in the art will understand that the present disclosure is not limited to the specific embodiments described herein, and that various obvious changes, readjustments, and substitutions can be made by those skilled in the art without departing from the scope of protection of the present disclosure. Therefore, although the present disclosure has been described in more detail through the above embodiments, the present disclosure is not limited to the above embodiments, and can include more other equivalent embodiments without departing from the concept of the present disclosure. The scope of the present disclosure is determined by the scope of the appended claims.

### INDUSTRIAL APPLICABILITY

In the method for acquiring a three-dimensional model provided by the present disclosure, based on the data to be deleted removed from the original single-frame point clouds, corresponding textures are removed from the texture data, and the texture data after removing the corresponding textures is rendered onto the initial three-dimensional model, thereby rendering a result that conforms to the user's expectation, facilitating the user's accurate analysis of the rendering result to obtain precise tooth restoration suggestions and other information, which has strong industrial applicability.

## Claims

1. A method for acquiring a three-dimensional model, comprising:
acquiring an initial three-dimensional model of a target object and a plurality of original single-frame textures, wherein the initial three-dimensional model is generated based on a plurality of target single-frame point clouds, and the target single-frame point clouds are determined by removing point cloud data to be deleted from original single-frame point clouds;
obtaining a plurality of target single-frame textures by removing texture data corresponding to the point cloud data to be deleted from the plurality of original single-frame textures; and
obtaining a target three-dimensional model of the target object by rendering the plurality of target single-frame textures onto the initial three-dimensional model.

2. The method according to claim 1, wherein obtaining the plurality of target single-frame textures by removing the texture data corresponding to the point cloud data to be deleted from the plurality of original single-frame textures comprises:
determining texture data to be deleted in the plurality of original single-frame textures by mapping the point cloud data to be deleted from the plurality of original single-frame point clouds onto the plurality of original single-frame textures; and
obtaining the plurality of target single-frame textures by removing the texture data to be deleted from the plurality of original single-frame textures.

3. The method according to claim 2, wherein determining texture data to be deleted in the plurality of original single-frame textures by mapping the point cloud data to be deleted from the plurality of original single-frame point clouds onto the plurality of original single-frame textures comprises:
determining a first mapping relationship between the original single-frame point clouds and the original single-frame textures according to a scanning sequence of the target object; and
determining the texture data to be deleted by mapping the point cloud data to be deleted from the plurality of original single-frame point clouds onto the plurality of original single-frame textures based on the first mapping relationship.

4. The method according to claim 1, wherein obtaining the target three-dimensional model of the target object by rendering the plurality of target single-frame textures onto the initial three-dimensional model comprises:
acquiring a first depth map of the target single-frame point clouds at a corresponding imaging viewing angle;
based on a first mapping relationship between the original single-frame point clouds and the original single-frame textures, determining a second mapping relationship between the target single-frame textures and the first depth map;
acquiring a second depth map of the initial three-dimensional model at a corresponding imaging viewing angle; and
based on the first depth map and the second depth map at the same imaging viewing angle, rendering the target single-frame textures onto the initial three-dimensional model to obtain the target three-dimensional model of the target object.

5. The method according to claim 4, wherein rendering, based on the first depth map and the second depth map at the same imaging viewing angle, the target single-frame textures onto the initial three-dimensional model to obtain the target three-dimensional model of the target object comprises:
acquiring target depth information equal to that of the first depth map from the second depth map; and
rendering the target single-frame textures onto a target mesh area corresponding to the target depth information to obtain the target three-dimensional model.

6. The method according to claim 1, wherein acquiring the initial three-dimensional model of the target object comprises:
acquiring a plurality of original single-frame point clouds of the target object, and determining a region to be deleted of the target object;
removing, based on the region to be deleted, the point cloud data to be deleted from the original single-frame point clouds to obtain the target single-frame point clouds; and
performing a mesh fusion on the target single-frame point clouds to obtain the initial three-dimensional model.

7. The method according to claim 6, wherein after acquiring the plurality of original single-frame point clouds of the target object, the method further comprises:
performing a sampling processing on the original single-frame point clouds through a first sampling method to obtain first sampled data in the original single-frame point clouds; and
performing the mesh fusion on the first sampled data to obtain a real-time reconstruction model, and displaying the real-time reconstruction model.

8. The method according to claim 6, wherein performing mesh fusion on the target single-frame point clouds to obtain the initial three-dimensional model comprises:
performing a sampling on the target single-frame point clouds according to a second sampling method, and obtaining second sampled data in the target single-frame point clouds; and
performing the mesh fusion on the second sampled data, and obtaining the initial three-dimensional model.

9. An apparatus for acquiring a three-dimensional model, comprising:
an acquisition module configured to acquire an initial three-dimensional model of a target object and a plurality of original single-frame textures, wherein the initial three-dimensional model is generated based on a plurality of target single-frame point clouds, and the target single-frame point clouds are determined by removing point cloud data to be deleted from original single-frame point clouds;
a determination module configured to remove texture data corresponding to the point cloud data to be deleted from the plurality of original single-frame textures to obtain a plurality of target single-frame textures; and
a rendering module configured to render the plurality of target single-frame textures onto the initial three-dimensional model to obtain a target three-dimensional model of the target object.

10. An electronic device, comprising:
a processor, a storage device, and executable instructions stored on the storage device;
wherein the processor reads the executable instructions from the storage device and implements the method according to any one of claims 1 to 8 when executing the executable instructions.

11. A computer-readable storage medium having a computer program stored thereon, wherein the storage medium stores a computer program which, when executed by a processor, causes the processor to implement the method according to any one of claims 1 to 8.
